# EUROPEAN PATENT APPLICATION

(11) **EP 0 599 048 A1**
(43) Date of publication of application: **01.06.1994**
(21) Application number: 93116852.0
(22) Date of filing: 19.10.1993
(51) Int. Cl.: A47J 39/00, A47L 19/00

(54) **Apparatus for treating and storing dishes**

(30) Priority: 23.11.1992 IT PN920087
(71) Applicant: Zanussi Elettrodomestici S.p.A., I-33170 Pordenone (IT)
(72) Inventor: Durazzani, Piero, I-33080 Porcia, Pordenone (IT)
(74) Representative: Giugni, Valter

(57) **Abstract**

Apparatus for treating and storing dishes, consisting of a receptacle (1) comprising support means (2) for the dishes stored therein and at least a front closing door (22), and provided with means that enable it to be installed in a wall-hung cabinet, includes means for drying (3,4), warming-up (3,4) and sterilizing (10) said dishes.

Said means for drying, warming-up and sterilizing stored dishes consist of at least an air heating element (3), a fan (4) for circulating the heated-up air, a conduit (5) accomodating said heating element and conveying the air taken in from a first intake opening (6) into said receptacle (1) through at least an outflow injector (7), and a UV-lamp (10).

## Description

The trend which is getting firmly established on the various marketplaces is clearly in favour of the use of compact-sized household appliances, owing to a general scarcity of available space especially in town homes and dwellings. At the same time, however, these appliances are required to ensure ever unprecedented performance capabilities extending beyond the mere operational aspect to embrace a more complete overall user benefit-to-cost ratio.

As a matter of fact, consumers usually tend to have less and less time to dedicate to their household chores, which anyway do not attract them. On the other hand, they certainly do not wish to give up the pleasure of having a kitchen which is always tidy and in good order, so arranged as to be capable of meeting ever increasing needs of convenience and cleanliness, especially as far as dishes and tableware in general are concerned.

Furthermore, as it is widely known, in the last few years there has been a breakthrough in the penetration of the so-called fitted kitchens, in which the home appliances are more or less wholly integrated, i.e. built-in, in mutually coordinated kitchen furniture cabinets with modular, standard sizes.

Such a solution has been greatly welcome by the consumers who had actually the way of appreciating its considerable advantages from the point of view of both a befitting home furnishing and decoration and an optimum utilization of the available space in the kitchen. It is in fact a common experience that available space in modern kitchens, especially those of town homes and dwellings, is generally at a premium and, anyway, almost in all cases inadequate to allow for accomodation of all the various household appliances, equipment and machines that are being offered to an ever increasing variety and quantity to increasingly relieve people from their household chores and reduce the time required to perform these household jobs.

This trend is a clear explanation for the increasing supply of products emphasizing additional performance capabilities, such as for instance clothes washing machines with the capability of additionally drying the washload with no need of using a separate dedicated apparatus, or washing machines in general that are arranged to enable a considerable amount of water (which is becoming an increasingly valuable resource) to be saved and/or recycled, or machines ensuring greater environment-friendliness by giving the possibility of using liquid detergents (less polluting), or the availability of fan-assisted refrigeration appliances ensuring a more effective preservation of food items and doing away with the necessary, but quite unpleasant periodical task of defrosting the freezer compartment, or even the growing demand for microwave ovens provided with grill facility which are taking much interest away from the bulkier, less convenient traditional ovens.

These products are even much more preferred or in much greater demand by the consumers when they do not require any additional space for performing their tasks, but on the contrary are fully fitting the existing kitchen cabinets. To this purpose they shall therefore be fully integrable, ie. capable of being built in, and be sized to modular, standard dimensions.

This development also explains the request made by a number of people, who are working close to the consumers and know by direct experience which are their actual needs and wishes, that a new kitchen product be identified which would be able to perform a variety of functions or tasks at the same time, ie. to enable dishes to be stored, dried and sterilized, apart from further possible auxiliary functions, without ideally taking up any additional space in the kitchen.

The objection that might be easily raised in this connection, ie. that such functions are already substantially performed by any normally available household dishwashing machine, so that no need is actually seen for another appliance to be installed in the kitchen, can be met in an equally easy way by emphasizing following basic facts:
a) only a small number of kitchens is currently equipped with a dishwashing machine, which still is a scarcely diffused, not so much used appliance even in countries where living standards and consumption patterns are certainly very developed;
b) in any case, dishwashers usually take up a lot of space under the counter and this space is not always available;
c) furthermore, dishwashers are still rather expensive appliances in relation to the service that they actually offer, and this explains their relatively low penetration rate in households;
d) finally, dishwashers are not able to perform a task of sterilization and warming up of the dishes without starting an actual washing cycle, thereby imposing the toll that this notoriously involves in terms of costs and time.

On the other hand, it is a widely known fact that some typical elements included in the furnishing of most fitted kitchens have internally some empty space that is not used to any practical purpose.

It would therefore be desirable, and it is in fact a purpose of the present invention, to provide both a mechanical-geometrical and a functional integration of one of said elements of kitchen furniture so as to be able to build into it an apparatus which is capable of performing the described dish storage and treatment functions, thereby achieving a space saving advantage added to greater convenience and tidiness.

This and further aims are reached by using the space that has hitherto been taken up by the plate-rack in order to replace the latter with the new apparatus which not only keeps acting as a dish storage means, much as the usual plate-rack currently is, but additionally performs further useful tasks.

The invention will be further described by way of non-limiting example with reference to the accompanying drawings, in which:

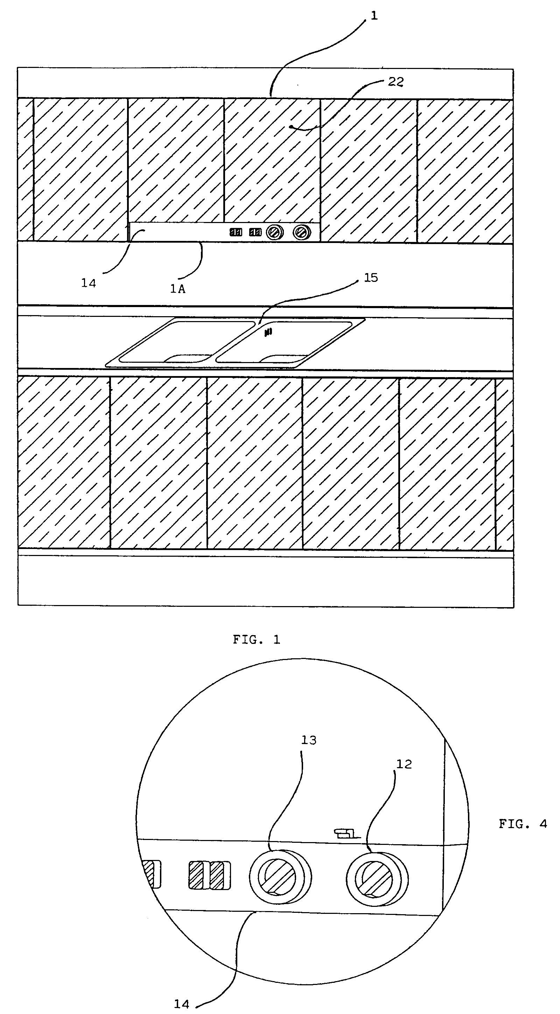

- Figure 1 is a perspective view of the apparatus according to the present invention, in its as-installed condition;

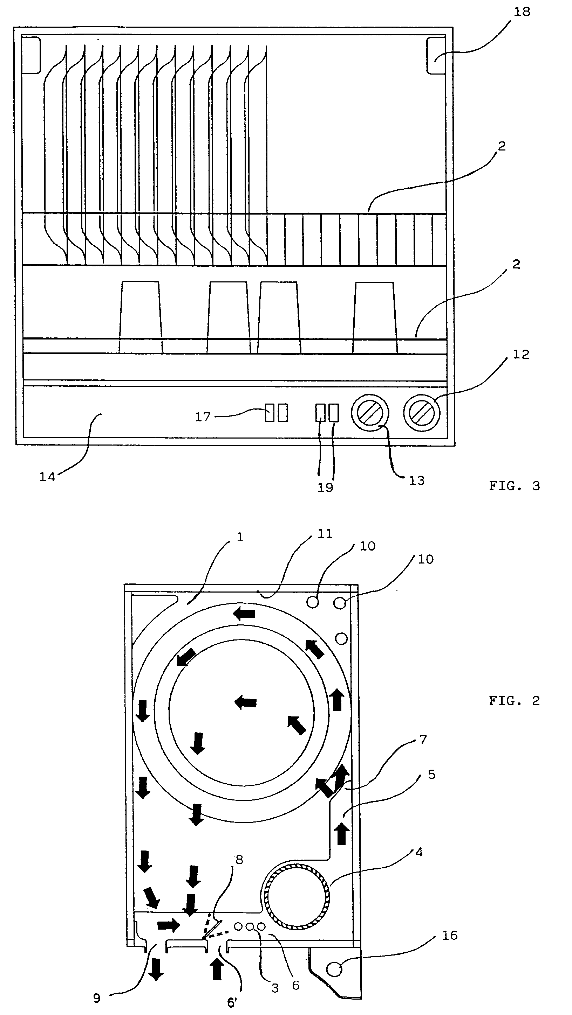

- Figure 2 is an operating diagram of the apparatus according to the present invention;
- Figure 3 is a view of the inner side of the apparatus according to the present invention;
- Figure 4 is an enlarged view of a detail of Figure 1.

Referring now to the above listed Figures, it can be noticed that the invention consists of a receptacle 1 intended to primarily hold, store and treat the dishes, having the shape of a parallelepiped and the standardized, modular dimensions that are typical of built-in appliances.

Said apparatus is provided with a whole set of means (not shown) adapted to enable it to be built in within an appropriate volume provided in or between the cabinets forming the suspended or wall-hung units of a fitted kitchen, in such a position that its lower wall 1A falls into substantial alignment with the lower surface of said wall-hung units and hangs directly over the worktop 15 therebeneath. It is further provided with means 2 for the orderly support of the dishes stored therein, a drying system that can also be used to warm up the dishes, and a system to perform the sterilization of the same dishes.

The drying system substantially consists of at least an air heating element 3, a fan 4 that is preferably arranged in a position upstream of said heating element, a conduit 5 that conveys the air drawn in through at least a intake opening 6 and blows it into said receptacle 1 through at least an outlet injector 7.

In view of eliminating the vapours that tend to form inside the apparatus, said intake opening 6 is arranged so as to be capable of combining with at least a second intake opening 6' which at least partly takes in air from the outside through the actuation of an appropriate diverter 8 that throttles the air intake flow of the two afore cited intake mouths. Furthermore, an arrangement is taken so that the steam generated inside the receptacle is able to escape outside through one or several apertures 9 that are located preferably along the lower portion thereof.

This drying system is also adapted to warm up the dishes, and this is further enhanced if the hot air is wholly recirculated inside the receptacle. This is a feasible thing if said intake opening 6' taking air in from the outside and said vapour release apertures 9 are fully shut.

An improvement in the above described warming-up function is achieved by providing the apparatus with a thermostat means 13 which, when connected with the heating element 3 and the fan 4 in an appropriate way, reacts by cutting off the power supply and, therefore, de-energizing said element and said fan when the temperature inside the receptacle reaches a pre-set value.

The sterilization system consists of one or more lamps 10 emitting ultraviolet radiations which are widely appreciated to produce a highly effective bactericide action.

Said lamps are arranged on the back wall or the ceiling 11 of the machine and have a prolonged shape so as to be able to irradiate as extensively as possible the dishes which, as shown in Figure 3, are stored in a vertical side-by-side arrangement transversally to both the bottom surface and the back wall.

In a most appropriate way, each one of said drying, warming up and sterilization functions of the apparatus can be controlled by a timer switch means 12, whereas the selection of the type of function to be performed by the machine can be made through a corresponding function selector means 19, both said control means being situated on a front panel 14 arranged in correspondence of the lower portion of the receptacle for convenient manoeuvrability by the user.

In a most advantageous way, the lower portion of said apparatus, ie. the portion that hangs over the underlying worktop 15, is provided with a lamp 16 to shed light from the top over said worktop, whereas also the switch 17 to control said lamp 16 on and off is conveniently arranged on said front control panel 14.

The apparatus is lighted inside by a lamp 18 which is located on a wall, while this lamp is switched on and off automatically through a micro-switch (not shown) that is arranged so as to be actuated by the door 22 being opened and closed, much in the same way the inner lighting of refrigerators is automatically switched on when the respective door is opened.

It will be appreciated that this embodiment of the present invention has been described and illustrated only by way of non-limiting example and may therefore be the subject of any modification considered to be appropriate without departing from the scope of the present invention.

## Claims

1. Apparatus for storing and treating dishes, comprising a receptacle (1) including support means (2) for the dishes to be stored, and at least a front door closing said receptacle, **characterized in that** it is provided with means enabling it to be installed inside a wall-hung kitchen cabinet, and in that it includes means for drying, warming up and sterilizing said dishes.

2. Apparatus according to claim 1, **characterized in that** said means for drying and warming up the dishes consist of at least an air heating element (3), a fan (4) for circulating said heated-up air, a conduit (5) that accomodates said heating element and conveys the air taken in from first intake opening (6) to blow it through at least an outflow injector (7) into said receptacle.

3. Apparatus according to claim 2, **characterized in that** it is provided with a second intake opening (6') opening to the outside and a diverter (8) capable of throttling inside said conduit (5) the air flows coming from said first intake opening (6) and said second intake opening (6').

4. Apparatus according to claim 3, **characterized in that** the receptacle (1) comprises at least an aperture (9) which opens freely to the outside.

5. Apparatus according to any of the preceding claims from 2 to 4, **characterized in that** it comprises a thermostat means (13) to regulate and control the inner temperature in the receptacle.

6. Apparatus according to any of the preceding claims from 2 to 5, **characterized in that** said sterilization means comprise a plurality of ultraviolet-radiation lamps (10) arranged on the back wall or the ceiling of said receptacle.

7. Apparatus according to any of the preceding claims, **characterized in that** it is provided with a timer switch means (12) arranged to control both the energization time of said air heating and circulating means (3, 4, 5, 6, 7) and the switch-on time of said ultraviolet-radiation lamps (10).

8. Apparatus according to any of the preceding claims, **characterized in that** it comprises at least a lamp (16) arranged externally on the bottom wall of said receptacle.

9. Apparatus according to any of the preceding claims, **characterized in that** it comprises a control panel (14) arranged on the lower front portion of said receptacle, said control panel (14) accomodating the setting means (12, 13, 17) for said thermostat means, said timer switch means and said external lamp, along with appropriate function selector means (19).

10. Apparatus according to any of the preceding claims, **characterized in that** said receptacle (1) is lighted internally, said lighting being switched on and off automatically by the door (22) being openend and closed.
